# EUROPÄISCHE PATENTSCHRIFT

(11) **EP 2 616 787 B1**
(45) Veröffentlichungstag und Bekanntmachung des Hinweises auf die Patenterteilung: **21.02.2018**
(21) Anmeldenummer: 11757313.9
(22) Anmeldetag: 15.09.2011
(51) Int. Cl.: G01L 7/04

(54) **DRUCKMESSGERÄT MIT VERBESSERTER ANORDNUNG EINER MESSFEDER**
PRESSURE MEASURING DEVICE HAVING AN IMPROVED ARRANGEMENT OF A MEASURING SPRING
APPAREIL DE MESURE DE PRESSION PRÉSENTANT UN AGENCEMENT DE RESSORT DE MESURE AMÉLIORÉ

(30) Priorität: 17.09.2010 DE 102010037633
(43) Veröffentlichungstag der Anmeldung: 24.07.2013
(73) Patentinhaber: Radau, Otto, 47475 Kamp-Lintfort (DE)
(72) Erfinder: Radau, Otto, 47475 Kamp-Lintfort (DE)
(74) Vertreter: Vogel, Andreas
(86) Internationale Anmeldenummer: PCT/EP2011/065977
(87) Internationale Veröffentlichungsnummer: WO 2012/035086

(56) Entgegenhaltungen:
- WO-A1-99/02955
- DE-A1- 10 313 986
- DE-C- 733 480
- DE-C- 838 657
- US-A- 2 712 240

## Beschreibung

Die vorliegende Erfindung betrifft ein Druckmessgerät zum Messen von Drücken von Fluiden, insbesondere Manometer, mit einer Messfeder, die an einem Grundkörper angeordnet ist, wobei die Messfeder eine gebogene Form mit einem Druckraum aufweist und wobei der Druckraum über eine Druckleitung im Druckkörper mit dem Fluid beaufschlagbar ist, so dass eine elastische Verformung der Messfeder eintritt, die über ein Messwerk als Druckwert anzeigbar ist.
Aus der DE 103 13 986 A1 ist ein Druckmessgerät zum Messen von Drücken von Fluiden bekannt. Das Druckmessgerät besitzt eine Messfeder, die an einem Grundkörper angeordnet ist, wobei die Messfeder eine gebogene Form mit einem Druckraum aufweist und wobei der Druckraum über eine Druckleitung im Grundkörper mit dem Fluid beaufschlagbar ist. Wird der Druckraum in der Messfeder unter Druck gesetzt, so verändert sich die Krümmung der Messfeder, und am freien Ende ist eine Anschlussfahne angeordnet, an die ein Messwerk angeschlossen werden kann. Das Messwerk bildet eine mechanische Verbindung zwischen dem sich bewegenden freien Ende der Messfeder und beispielsweise einem Zeiger zur Anzeige eines Druckwertes. Zur Verbindung der Messfeder am Grundkörper ist ein Verbindungselement vorgesehen, das zunächst stirnseitig an das Anschlussende der Messfeder aufgeschweißt wird. Dazu wird ein Laserschweißverfahren oder Elektronenstrahlschweißverfahren vorgeschlagen, und die Schweißung erfolgt durch das Verbindungselement hindurch, um einen Lochbrand im dünnen Material der Messfeder zu vermeiden. Anschließend wird das Verbindungselement mit der angeschweißten Messfeder auf einer Aufnahmefläche auf dem Grundkörper aufgesetzt und mit diesem verschweißt. Das Verbindungselement besitzt einen Durchgang, und die Anordnung des Verbindungselementes mit der Messfeder erfolgt in dem Bereich, in dem die Druckleitung aus dem Grundkörper austritt und mit dem Durchgang fluchten kann. Im Ergebnis ist der Druckraum der Messfeder mit der Druckleitung im Grundkörper fluidisch verbunden, so dass der Druckraum über die Druckleitung im Grundkörper und den Durchgang im Verbindungselement druckbeaufschlagt werden kann.
Nachteilhaft ist bei der bekannten Verbindungstechnik der Messfeder am Grundkörper die Verwendung des Verbindungselementes, das von verschiedenen Seiten des Verbindungselementes verschweißt werden muss und somit ein erheblicher Verzug durch die Wärmebeeinflussung erfolgen kann, die durch die Verschweißung entsteht. Insbesondere ist die kontrollierte Durchschweißung durch das Verbindungselement zur Verbindung des Messrohres mit dem Verbindungselement sehr aufwändig, da eine genaue Prozessführung des Schweißvorganges erforderlich ist. Ferner ist nur erschwert eine genaue Positionierung der Messfeder am Grundkörper möglich, wobei ein weiterer Nachteil dadurch entsteht, dass ein Spalt zwischen dem Verbindungselement und der Aufnahmefläche des Grundkörpers mit Fluiddruck beaufschlagt ist, so dass im Spalt eine Spaltkorrosion stattfinden kann.

US2712240 und WO99/02955 offenbaren andere Druckmessgeräten mit Messfeder. Es ist daher die Aufgabe der vorliegenden Erfindung, ein Druckmessgerät zum Messen von Drücken von Fluiden zu schaffen, mit dem die Nachteile des vorstehend bezeichneten Standes der Technik überwunden werden und eine verbesserte Anordnung der Messfeder am Grundkörper möglich ist.

Diese Aufgabe wird ausgehend von einem Druckmessgerät zum Messen von Drücken von Fluiden gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass zur Verbindung der Messfeder mit dem Grundkörper ein Anschlagkörper vorgesehen ist, gegen den die Messfeder mit einer ersten Federseite zur Anlage gebracht ist und wobei die Messfeder mit dem Anschlagkörper verschweißt ist.

Die Erfindung geht von dem Gedanken aus, anstatt eines Verbindungselementes, das zunächst an der Messfeder wird und anschließend am Grundkörper verschweißt wird, einen Anschlagkörper am Grundkörper vorzusehen. Damit wird der Vorteil erreicht, dass die Messfeder positionsgenau am Anschlagkörper zur Anlage gebracht werden kann. Bereits in dieser genauen Position kann die Messfeder am Anschlagkörper verschweißt werden, und die Messfeder besitzt ihre genaue Position auf dem Grundkörper. Die Anschlagposition der Messfeder am Anschlagkörper ist derart gewählt, dass der Druckraum in der Messfeder mit dem Ausgang der Druckleitung im Grundkörper fluidisch kommunizieren kann. Unter einem Anschlagkörper wird im Rahmen der vorliegenden Erfindung eine körperliche Ausgestaltung am Grundkörper verstanden, der eine Anschlagmöglichkeit zur positionsgenauen Anordnung der Messfeder auf dem Grundkörper ermöglicht. Da die Messfeder ein Anschlussende besitzt, an dem die Messfeder mit dem Grundkörper verbunden wird, ist der Anschlagkörper auf der Aufnahmefläche des Grundkörpers derart geometrisch ausgestaltet, dass die Messfeder mit ihrer Kontur, insbesondere mit der Kontur des Anschlussendes, positionsgenau in die Kehle zwischen dem Anschlagkörper und der Aufnahmefläche des Grundkörpers positioniert werden kann.

Unter einem Druckmessgerät wird vorliegend jedes Messgerät verstanden, das auf dem Prinzip beruht, durch ein unter Druck gesetztes Fluid eine elastische Verformung eines Bauteils hervorzurufen. Vorliegend kann das Druckmessgerät daher auch einen Druckschalter oder ein Thermometer bilden.

Gemäß einer Weiterbildung der erfindungsgemäßen Anordnung der Messfeder am Grundkörper ist ein Gegenanschlagkörper vorgesehen, der an einer der ersten Federseite gegenüberliegenden zweiten Federseite gegen die Messfeder zur Anlage gebracht ist. Die Messfeder kann eine flache, etwa ovale Querschnittsform aufweisen, so dass sich eine erste Federseite und eine zweite Federseite ergibt. Ist die Messfeder mit der ersten Federseite gegen den Anschlagkörper zur Anlage gebracht, kann mit dem Gegenanschlagkörper die Messfeder am Anschlussende zwischen dem Anschlagkörper und dem Gegenanschlagkörper eingeklemmt werden. Dabei kann der Gegenanschlagkörper mit einer entsprechenden Vorrichtung gegen die Messfeder gehalten werden, so dass der Gegenanschlagkörper, die Messfeder und der Anschlagkörper insgesamt auf Block geschoben wird. Damit wird der Vorteil erreicht, dass zum anschließenden Verschweißen der Messfeder mit den Anschlusskörpern keine Spalte überbrückt werden müssen. Damit ergibt sich vorteilhafterweise die Möglichkeit, einen Druck auf den Gegenanschlagkörper auszuüben, so dass der Gegenanschlagkörper gegen die Messfeder und die Messfeder gegen den Anschlagkörper gedrückt wird. Durch diesen Druck können die Spalte zwischen der Messfeder und den Anschlagkörpern überwunden werden, und die Spalte müssen nicht erst durch die Schweißung überbrückt werden.

Gemäß einer ersten möglichen Ausführungsform kann der Anschlagkörper einteilig mit dem Grundkörper ausgebildet sein. Der Grundkörper kann beispielsweise ein durch spanende Fertigung hergestellter Körper sein, so dass der Anschlagkörper in Gestalt eines Absatzes auf der Aufnahmefläche des Grundkörpers ausgebildet ist. Die Anschlagseite des Anschlagkörpers, gegen den die Messfeder zur Anlage gelangt, kann dabei durch eine spanende Bearbeitung der Kontur der Messfeder bereits angepasst sein.

Der Gegenanschlagkörper kann auf gleiche Weise der Kontur der Messfeder angepasst sein.

Gemäß einer zweiten möglichen Ausführungsform kann der Anschlagkörper als Einzelteil ausgeführt und am Grundkörper angeordnet und insbesondere mittels einer Schweißung am Grundkörper angeschweißt sein. Das Verschweißen des Anschlagkörpers am Grundkörper erfolgt dabei vor der Verschweißung der Messfeder am Anschlagkörper.

Vorteilhafterweise kann der Anschlagkörper und/oder der Gegenanschlagkörper wenigstens eine Führungsanformung aufweisen, die eine genaue Positionierung der Anschlagkörper zueinander ermöglicht. Sind die Anschlagflächen der Anschlagkörper der Kontur der Messfeder angepasst, so ist eine richtige Positionierung der Anschlagkörper zueinander wichtig, so dass keine Spalte zwischen den Anschlagkörpern und der Messfeder auftreten. Die Führungsanformungen können Führungsflächen ausbilden, die so zueinander ausgerichtet sind, dass die Führungsflächen der Anschlagkörper aufeinander abgleiten, wenn der Gegenanschlagkörper gegen den Anschlagkörper geschoben wird, um die Messfeder einzuklemmen. Im Ergebnis ist eine positionsgenaue Anordnung der Anschlagkörper und der Messfeder zueinander ermöglicht.

Mit besonderem Vorteil kann auch der Gegenanschlagkörper durch eine Schweißung am Grundkörper angeordnet werden. Selbstverständlich erfolgt die Anordnung des Gegenanschlagkörpers durch eine Schweißung am Grundkörper erst dann, wenn der Gegenanschlagkörper mit der Messfeder in exakte Position gebracht ist, und das Verschweißen des Gegenanschlagkörpers an den Grundkörper erfolgt während der Kraftbeaufschlagung auf den Gegenanschlagkörper, durch die der Gegenanschlagkörper und die Messfeder gegen den Anschlagkörper auf Block geschoben sind.

Die Messfeder kann vorteilhafterweise wenigstens am Anschlagkörper und/oder am Gegenanschlagkörper verschweißt werden. Die Schweißung kann mittels eines Laserstrahlschweißens oder eines Elektronenstrahlschweißens erzeugt werden. Besonders vorteilhaft ist es, wenn die Fokussierung des Laserstrahls oder des Elektronenstrahls in Richtung zum Anschlagkörper oder zum Gegenanschlagkörper verschoben wird. Damit wird der Vorteil erreicht, dass das dünne Blechmaterial der Messfeder nicht zu stark aufschmilzt, um einen Lochbrand zu vermeiden. Der Anschlagkörper und/oder der Gegenanschlagkörper besitzen im Vergleich zur Messfeder eine größere Wärmekapazität, die durch die Schweißquelle zunächst aufgeheizt werden muss. Ist der Laserstrahl oder der Elektronenstrahl in Richtung zur größeren Wärmekapazität verschoben, so kann ein Schmelzbad erzeugt werden, das im Wesentlichen aus dem Material des Anschlagkörpers gebildet wird. Ferner kann der Laserstrahl oder der Elektronenstrahl defokussiert auf die zu verschweißende Stelle gerichtet werden, um insbesondere einen größeren Bereich des Materials der Anschlagkörper zu erhitzen.

Neben der Möglichkeit, für die Schweißung einen Schweißzusatzwerkstoff zu verwenden, kann die Schweißung vorteilhafterweise ohne die Verwendung eines Schweißzusatzwerkstoffes erfolgen. Schweißzusatzwerkstoffe können gemäß einem speziellen Herstellungsverfahren durch Erschmelzen unter Vakuumatmosphäre hergestellt werden, um in der gemeinsamen Schmelze mit dem Grundwerkstoff Legierungsbestandteile aufzunehmen, sodass Schweißungen besonderer Festigkeit erreichbar sind. Mit besonderem Vorteil kann der Anschlagkörper und/oder der Gegenanschlagkörper aus einem Schweißzusatzwerkstoff hergestellt sein, um bei der Verschweißung mit dem Grundkörper und/oder mit der Messfeder hohe Festigkeiten der Schweißverbindung zu ermöglichen.

Erfolgt die Schweißung zwischen der Messfeder und dem Anschlagkörper beziehungsweise dem Gegenanschlagkörper, so kann eine Materialaufschmelzung derart tief erfolgen, dass neben einer Verschweißung der Messfeder mit dem Anschlagkörper beziehungsweise dem Gegenanschlagkörper zugleich eine Verschweißung des Anschlagkörpers und/oder des Gegenanschlagkörpers mit dem Grundkörper erfolgt. Die Aufschmelzung des Materials des Grundkörpers kann dabei durch Wärmeleitung vom Anschlagkörper beziehungsweise von Gegenanschlagkörper in den Grundkörper erfolgen. Damit wird insbesondere der Vorteil erreicht, dass das Fluid nicht zwischen die Aufnahmefläche des Grundkörpers und den Anschlagkörper oder den Gegenanschlagkörper gelangen kann. Durch die stoffschlüssige Verbindung zwischen dem Anschlagkörper beziehungsweise dem Gegenanschlagkörper und der Aufnahmefläche des Grundkörpers wird verhindert, dass das Fluid zwischen den Anschlagkörper beziehungsweise den Gegenanschlagkörper und den Grundkörper gelangen kann. Erfindungsgemäß ist die Messfeder aus zwei aufeinander angeordneten Blechstreifen ausgebildet sein, die umfangsseitig miteinander verbunden sind, so dass zwischen den Blechstreifen der Druckraum gebildet ist. Die Blechstreifen können umfangsseitig aufeinander geschweißt sein, wobei als Schweißverfahren wiederum ein Laserstrahlschweißen oder ein Elektronenstrahlschweißen verwendet werden kann. Die Blechstreifen können aus gleichen oder unterschiedlichen Materialien gebildet werden, die aufeinander verschweißt werden können.
Zur Ausbildung des Druckraumes zwischen den Blechstreifen kann die Messfeder nach Einbringung der erforderlichen Biegung in die Messfeder unter Druck gesetzt werden. Damit wird ein Verfahren des Innenhochdruckumformens nachgebildet, und der Druckraum der Messfeder wird unter hohen Druck gesetzt, beispielsweise bis zu 100 bar, bis zu 150 bar oder bis zu 200 bar, wobei der zu messende Fluiddruck im Messeinsatz der Messfeder beispielsweise lediglich bis zu 30 bar beträgt. Durch das Innenhochdruckumformen kann die Messfeder in eine Innenkontur eines Werkzeugs gedrückt werden, die das Negativ der Außenkontur der Messfeder bildet. Hierzu kann die Messfeder in eine entsprechende Vorrichtung eingesetzt werden.

Mit weiterem Vorteil weist die Messfeder am freien Ende eine Anschlussfahne auf. an die wenigstens ein Element des Messwerkes des Druckmessgerätes anschließbar ist, wobei die Anschlussfahne insbesondere einteilig aus wenigstens einem der Blechstreifen gebildet ist. Die Anschlussfahne kann nachträglich abgewinkelt werden, so dass die Anschlussfahne etwa 90 Grad von der Messfeder absteht. Der Anschluss des Elementes des Messwerkes an die Anschlussfahne kann über eine Schweißverbindung zwischen dem Element und der Anschlussfahne erfolgen, wobei auch eine Lötverbindung, eine Schraubverbindung, eine Nietverbindung oder dergleichen Verwendung finden kann.

Die Aufgabe der vorliegenden Erfindung wird ferner durch eine Messfeder für ein Druckmessgerät zum Messen von Drücken von Fluiden, insbesondere Manometer, gelöst, wobei die Messfeder an einem Grundkörper angeordnet ist und eine gebogene Form mit einem Druckraum aufweist, wobei der Druckraum über eine Druckleitung im Grundkörper mit dem Fluid beaufschlagbar ist, so dass eine elastische Verformung der Messfeder eintritt, die über ein Messwerk als Druckwert anzeigbar ist. Dabei ist vorgesehen, dass zur Verbindung der Messfeder mit dem Grundkörper ein Anschlagkörper vorgesehen ist, gegen den die Messfeder mit einer ersten Federseite zur Anlage gebracht ist und wobei die Messfeder mit dem Anschlagkörper verschweißt ist. Die für das voranstehend beschriebene Druckmessgerät aufgezeigten Ausführungsformen, Vorteile und Gestaltungsmöglichkeiten finden für die erfindungsgemäße Messfeder ebenfalls Anwendung.

Die Aufgabe der vorliegenden Erfindung wird ferner gelöst durch ein Verfahren zur Herstellung von Messfedern für ein Druckmessgerät zum Messen von Drücken von Fluiden, insbesondere Manometer, wobei die Messfedern eine gebogene Form mit einem Druckraum aufweisen und wobei der Druckraum mit einem Fluid beaufschlagbar ist, sodass eine elastische Verformung der Messfedern eintritt, die über ein Messwerk als Druckwert anzeigbar ist, wobei das Verfahren wenigsten die folgenden Schritte umfasst: Anordnen eines ersten Bleches und eines zweiten Bleches in einer planparallelen Lage aufeinander, Erzeugen von Aufweitungen von Anschlussenden mit einem Dornwerkzeug für eine Vielzahl von Messfedern zum Anschluss an einen Grundkörper, Herstellung von Schweißungen zum Verschweißen der Bleche wenigstens im Bereich der Aufweitungen aufeinander, Walzen der aufeinander geschweißten Bleche in eine gebogene Form, wobei die Biegung der gebogenen Form der Messfedern entspricht, und Vereinzeln der Messfedern mittels einem Trennverfahren.

Insbesondere kann als weiterer Zwischenschritt des Verfahrens vorgesehen sein, dass Schweißnähte hergestellt werden, die die vollständigen Konturen einer Vielzahl von Messfedern bilden, wobei die Herstellung der Schweißnähte vorzugsweise nach dem Walzen der aufeinander geschweißten Bleche in die gebogene Form vorgenommen wird. Die Herstellung von Schweißungen vor dem Walzen der gebogenen Form dient dabei zur Konturierung der Aufweitungen der Anschlussenden mit dem Dornwerkzeug und zugleich dem positionsgenauen Heften der Bleche aufeinander. Das aufgeweitete Anschlussende der Messfeder bildet dabei die Kontur der Messfeder, an die der Anschlagkörper beziehungsweise der Gegenanschlagkörper angepasst ist. Durch die Aufweitung ergibt sich ein verbessertes Strömungsverhalten des Druckfluides zwischen der Druckleitung und dem Druckraum in der Messfeder sowie eine bessere mechanische Stabilität der Messfeder.

Die Vereinzelung der Messfedern kann mittels einem Lasertrennverfahren vorgenommen werden, indem eine Vielzahl von Laserschnitten gebildet wird, die vorzugsweise benachbart oder zum Verlauf der Schweißnähte verlaufen. Das Lasertrennverfahren kann ein konventionelles Laserschmelz- oder Laserbrennschneiden betreffen, wobei mit Vorteil ein Trennverfahren durch Laserablation erfolgen kann, da die Messfeder bereits die gebogene Form aufweist, und durch das Laserablationsverfahren kann die Führung des Lasers im Raum vereinfacht durchgeführt werden. Insbesondere ist kein Schneidgas erforderlich, und es muss keine Schneiddüse über das dreidimensional gebogene Bauteil geführt werden. Die Vereinzelung der Messfedern kann in der gleichen mechanischen Aufspannung erfolgen wie auch die Herstellung der Schweißnähte zur Konturierung der Messfedern.

Mit noch weiterem Vorteil können die Konturen der Schweißnähte zur Bildung der Messfedern die Anschlussfahnen umfassen, die nach Vereinzelung der Messfedern in eine abgewinkelte Anordnung gebogen werden.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht eines Ausführungsbeispiels eines Druckmessgerätes mit einer Messfeder, die an einem Grundkörper angeordnet ist,
- Figur 2: eine perspektivische Ansicht der Anordnung der Messfeder am Grundkörper gemäß dem Ausführungsbeispiel in Figur 1,
- Figur 3: eine dreidimensionale Ansicht des Grundkörpers, an dem ein Anschlagkörper angebracht ist,
- Figur 4: eine dreidimensionale Ansicht des Grundkörpers, wobei sowohl ein Anschlagkörper als auch ein Gegenanschlagkörper am Grundkörper angebracht sind,
- Figur 5: eine dreidimensionale Ansicht einer Messfeder mit den Merkmalen der vorliegenden Erfindung,
- Figur 6: eine Seitenansicht der Anordnung der Messfeder am Grundkörper, wobei der Vorgang des Schweißens der Messfeder an die Anschlagkörper dargestellt ist und
- Figur 7: eine dreidimensionale Ansicht eines Ausführungsbeispiels eines Bleches, aus dem eine Vielzahl von Messfedern herstellbar ist.

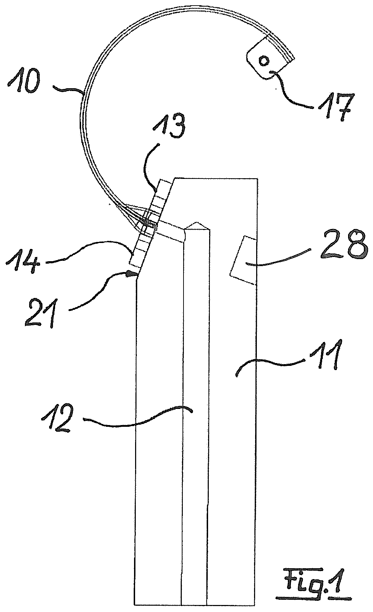

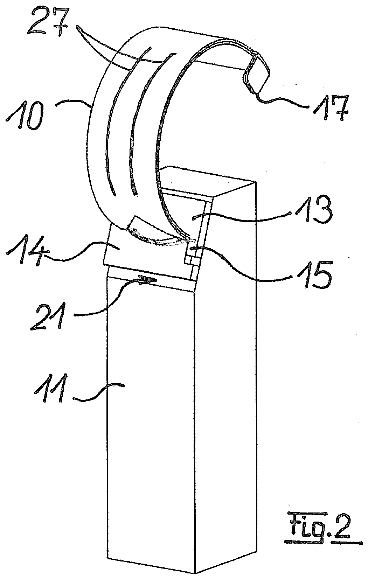

Die Figuren 1 und 2 zeigen in einer Seitenansicht und in einer perspektivischen Ansicht ein Ausführungsbeispiel der Anordnung einer Messfeder 10 an einem Grundkörper 11 der vorliegenden Erfindung. Die Messfeder 10 bildet das Messorgan in einem Druckmessgerät zum Messen von Drücken von Fluiden, wie diese insbesondere aus Manometern bekannt sind. Im Grundkörper 11 befindet sich eine Druckleitung 12, die mit einem Druckraum fluidisch verbunden ist, der in der flach ausgeführten Messfeder 10 vorhanden ist. Die Druckleitung 12 wird mit einem Drucksystem verbunden, in dem sich das Fluid befindet, für das der Druck gemessen werden soll. Die Druckmessung betrifft daher die Messung eines statischen Druckes. Wird der Druckraum in der Messfeder 10 unter Druck gesetzt, so verformt sich die Messfeder 10, indem sich beispielsweise die Krümmung der gebogenen Form der Messfeder 10 verändert. Am freien Ende der Messfeder 10 befindet sich eine Anschlussfahne 17, so dass sich bei Druckbeaufschlagung der Messfeder 10 die Position der Anschlussfahne 17 gegenüber der Position des Grundkörpers 11 ändert. An die Anschlussfahne 17 kann ein Messwerk mechanisch verbunden werden, über das ein Druckwert beispielsweise mittels eines Zeigers anzeigbar ist.

Die Erfindung betrifft die vorteilhafte Anordnung der Messfeder 10 am Grundkörper 11. Hierzu ist ein Anschlagkörper 13 vorgesehen, der beispielhaft als Einzelteil ausgeführt ist und auf einer Aufnahmefläche 21 des Grundkörpers 11 befestigt ist. Die Messfeder 10 wird gegen eine Anschlagkontur des Anschlagkörpers 13 zur Anlage gebracht, wobei weiterhin ein Gegenanschlagkörper 14 gezeigt ist, der gegen eine gegenüberliegende Federseite der Messfeder 10 zur Anlage gebracht werden kann. Wird auf den Gegenanschlagkörper 14 ein mechanischer Druck aufgebracht, so kann das Anschlussende 10 zwischen dem Anschlagkörper 13 und dem Gegenanschlagkörper 14 eingeklemmt werden. Um eine richtige Position des Gegenanschlagkörpers 14 am Anschlagkörper 13 beziehungsweise an der Messfeder 10 sicherzustellen, weist sowohl der Anschlagkörper 13 als auch der Gegenanschlagkörper 14 jeweils eine Führungsanformung 15 auf. Die Führungsanformung 15 ist derart ausgebildet, dass die seitliche Position des Gegenanschlagkörpers 14 am Anschlagkörper 13 geführt werden kann. Wird der Gegenanschlagkörper 14 gegen die Führungsanformung 15 zur Anlage gebracht, kann der Gegenanschlagkörper 14 in einer geraden Führungsrichtung in Richtung zum Anschlagkörper 13 bewegt werden, und die Messfeder 10 wird mit dem Anschlussende zwischen den Anschlagkörpern 13 und 14 eingeklemmt. Anschließend kann eine Verschweißung stattfinden, mit der die Anschlagkörper 13 und 14 am Anschlussende der Messfeder 10 verschweißt werden.

Auf der der Aufnahmefläche 21 des Grundkörpers 11 gegenüberliegenden Seite ist in Figur 1 eine Fixieraufnahme 28 in Gestalt einer Bohrung gezeigt, in die ein Referenzelement einsetzbar ist. Sollen der Anschlagkörper 13 und der Gegenanschlagkörper 14 mit der dazwischen liegend aufgenommenen Messfeder 10 auf der Aufnahmefläche 21 zur Verschweißung mittels eines Positionierwerkzeugs positioniert werden, kann die Positionierung durch die Fixieraufnahme 28 unterstützt werden. Das Referenzelement kann dabei Bestandteil des Positionierwerkzeugs sein, und die Positionierung der Messfeder 10 kann am Austritt der Druckleitung 12 aus der Aufnahmefläche 21 ausgerichtet werden.

Die Messfeder 10 ist in Figur 2 beispielhaft mit zwei Zwischenschweißnähten 27 dargestellt, mit denen der erste 18 und der zweite Blechstreifen 19 aufeinander geschweißt sind. Wird die Messfeder 10 in einem anschließenden Innenhochdruckumformverfahren umgeformt, so entstehen wenigstens teilweise durch die Zwischenschweißnähte 27 getrennte Teilkammern der Druckkammer zwischen den Blechstreifen 18 und 19. Dadurch kann erreicht werden, dass die Druckkammer der Messfeder 10 ein geringeres Gesamtvolumen aufweist, und der Temperatureinfluss auf das Druckmessgerät kann verringert werden.

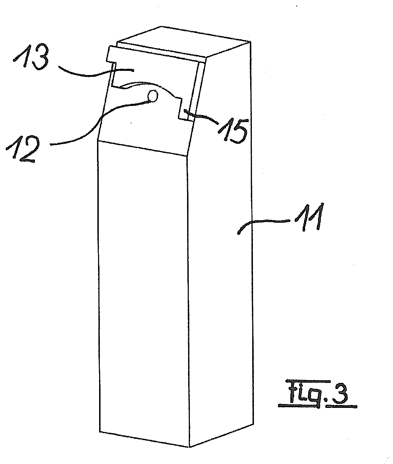

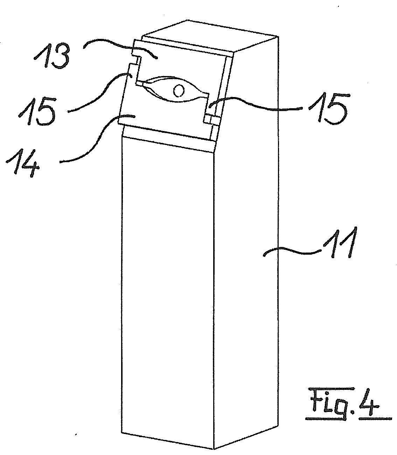

Die Figuren 3 und 4 zeigen eine perspektivische Ansicht des Grundkörpers 11, wobei in Figur 3 lediglich der Anschlagkörper 13 und in Figur 4 ferner der Gegenanschlagkörper 14 am Grundkörper 11 angeordnet ist. Die Anordnung des Gegenanschlagkörpers 14 am Grundkörper 11 in Figur 4 ist lediglich beispielhaft gezeigt, und die Messfeder 10, die zwischen den Anschlagkörpern 13 und 14 klemmend gehalten wird, ist beispielhaft nicht dargestellt.

Die Fügereihenfolge umfasst zunächst die Anordnung des Anschlagkörpers 13 am Grundkörper 11, wobei die Anordnung über eine nicht näher gezeigte Verschweißung erfolgen kann. Ist der Anschlagkörper 13 am Grundkörper angeordnet, so wird die Messfeder 10 gegen den Anschlagkörper 13 zur Anlage gebracht und die Messfeder 10 wird gemäß einem ersten Ausführungsbeispiel am Anschlagkörper 13 verschweißt. Anschließend wird der Gegenanschlagkörper 14 gegen die Messfeder 10 zur Anlage gebracht und ebenfalls mit dem Grundkörper 11 verschweißt. Anschließend kann eine Verschweißung zwischen dem Gegenanschlagkörper 14 und der Messfeder 10 erfolgen.

Gemäß einem weiteren Ausführungsbeispiel einer Fügefolge kann wiederum der Anschlagkörper 13 am Grundkörper 11 stoffschlüssig angeordnet werden. Anschließend wird zunächst die Messfeder 10 und darauf folgend der Gegenanschlagkörper 14 am Grundkörper 11 angeordnet. Dabei kann auf den Gegenanschlagkörper 14 eine Haltekraft aufgebracht werden, so dass der Gegenanschlagkörper 14, die Messfeder 10 und der Anschlagkörper 13 auf Block gehalten werden. Dabei können zwischen den Körpern 10, 13 und 14 auftretende Spalte insbesondere durch elastische Verformung des Anschlussendes der Messfeder 10 herausgedrückt werden. Während die Kraft auf den Gegenanschlagkörper 14 aufrecht erhalten bleibt, kann zunächst der Gegenanschlagkörper 14 in der gehaltenen Position am Grundkörper 11 verschweißt werden. Anschließend erfolgt eine Verschweißung zwischen der Messfeder 10 und dem Anschlagkörper 13 sowie dem Gegenanschlagkörper 14. Der Vorteil der Fügereihenfolge besteht darin, dass sämtliche Spalte zwischen den zu fügenden Körpern 10, 13 und 14 zunächst beseitigt werden, so dass die Spalte nicht durch das Schweißverfahren überbrückt werden müssen.

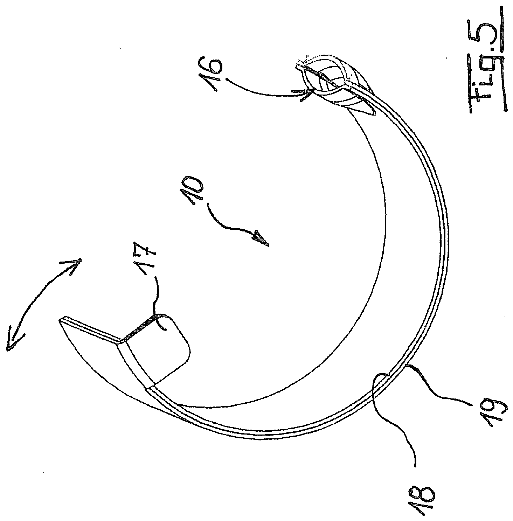

Figur 5 zeigt in einer perspektivischen Ansicht ein vorteilhaftes Ausführungsbeispiel einer erfindungsgemäßen Messfeder 10, wie diese am Grundkörper 11 angeordnet werden kann. Die Messfeder 10 weist am Anschlussende eine Aufweitung 16 auf, die mittels eines Dornwerkzeuges durch Einleitung einer plastischen Verformung des Anschlussendes erzeugt wird. Durch die Aufweitung 16 werden die Strömungseigenschaften zwischen dem Druckraum in der Messfeder 10 und der Druckleitung 12 im Grundkörper 11 verbessert. Ferner wird die Halterung der Messfeder 10 am Grundkörper 11 verbessert, da das Anschlussende der Messfeder 10 durch die Aufweitung 16 ausgesteift wird und da ein größeres Flächenträgheitsmoment erzeugt wird.

Die Messfeder 10 ist aus einem ersten Blechstreifen 18 und einem zweiten Blechstreifen 19 gebildet. Die Blechstreifen 18 und 19 sind randseitig aufeinander geschweißt, und können insbesondere unterschiedliche Werkstoffe aufweisen. Die Messfeder 10 weist am freien Ende eine Anschlussfahne 17 auf, mit der die Messfeder 10 mit einem Messwerk des Druckmessgerätes mechanisch verbunden werden kann. Wird der Druckraum in der Messfeder 10, der zwischen den beiden Blechstreifen 18 und 19 gebildet wird, unter Fluiddruck gesetzt, so kann sich die Messfeder 10 elastisch verformen. Die elastische Verformung bewirkt eine Lageänderung des freien Endes der Messfeder 10 und damit der Anschlussfahne 17, siehe gezeigter Doppelpfeil. Hingegen ändert sich die Lage des Anschlussendes der Messfeder 10 mit der Aufweitung 16 am Grundkörper 11 nicht, so dass durch die Bewegung des freien Endes der Messfeder 10 ein Messausschlag über das Messwerk abgegriffen werden kann und auf einen Zeiger übertragbar ist. Damit kann ein Druckwert angezeigt werden, der direkt abhängig ist von der Druckbeaufschlagung des Druckraums in der Messfeder 10.

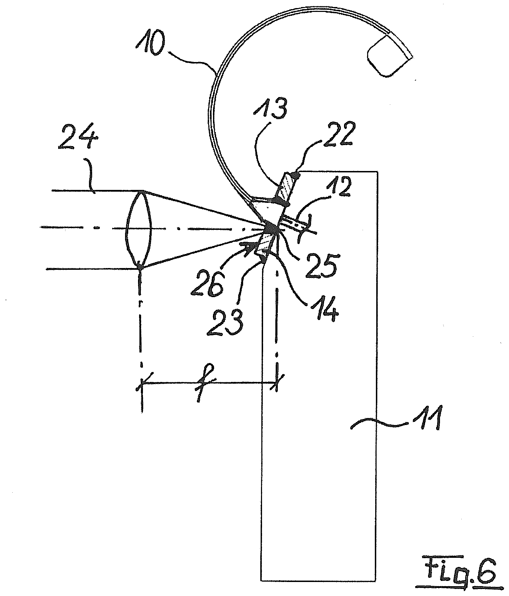

Figur 6 zeigt in einer seitlichen Ansicht die Anordnung der Messfeder 10 am Grundkörper 11, wobei zur Anordnung der Messfeder 10 sowohl der Anschlagkörper 13 als auch der Gegenanschlagkörper 14 gezeigt sind. Ferner ist die Druckleitung 12 im Grundkörper 11 gezeigt, über die der Druckraum der Messfeder 10 druckbeaufschlagt werden kann.

Zunächst wird der Anschlagkörper 13, beispielhaft gezeigt als ein Einzelteil, am Grundkörper 11 mittels einer Schweißverbindung 22 lagegenau angeschweißt. Anschließend wird die Messfeder 10 mit einer Haltevorrichtung am Anschlagkörper 13 zur Anlage angeordnet, und der Gegenanschlagkörper 14 wird gegen die Messfeder 10 unter leichter Kraftaufbringung zur Anlage gebracht. Anschließend wird der Gegenanschlagkörper 14 mit einer Schweißverbindung 23 am Grundkörper 11 verschweißt. Anschließend erfolgt die Verschweißung zwischen dem Anschlagkörper 13 beziehungsweise dem Gegenanschlagkörper 14 und der Messfeder 10. Hierzu ist beispielhaft ein Laserstrahl 24 dargestellt, der im Bereich der Schweißnaht 25 zwischen dem Gegenanschlagkörper 14 und der Messfeder 10 vorhanden ist. Der Laserstrahl 24 wird leicht defokussiert in Bezug auf die Oberfläche 26 des Gegenanschlagkörpers 14, so dass der Fokus des Laserstrahls 24 mit seiner Fokallänge f im Material des Gegenanschlagkörpers 14 liegt. Ferner wird der Laserstrahl 24 derart in Richtung zum Material des Gegenanschlagkörpers 14 einjustiert, dass hauptsächlich der Werkstoff des Gegenanschlagkörpers 14 aufgeschmolzen wird. Damit wird vermieden, dass beim Aufschmelzen des Werkstoffes der Messfeder 10 ein Lochbrand im Material der Messfeder 10 entsteht. Auf gleiche Weise kann die Schweißnaht zwischen der Messfeder 10 und dem Anschlagkörper 13 hergestellt werden.

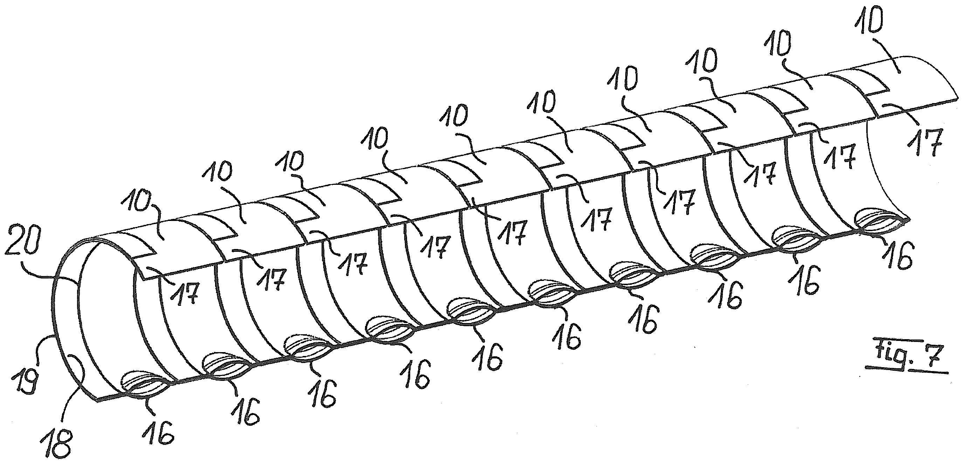

Figur 7 zeigt in einer perspektivischen Ansicht eine Anordnung einer Vielzahl von Messfedern 10, die als durchgehende Blechstreifen 18 und 19 ausgebildet sind. Damit wird ein vorteilhaftes Herstellungsverfahren zur Herstellung der Messfedern 10 aufgezeigt.

Das Verfahren kann das Anordnen des ersten Bleches 18 und des zweiten Bleches 19 in einer planparallelen Lage aufeinander umfassen, wobei die Bleche 18 und 19 entgegen der Darstellung noch eine ebene Streckung aufweisen. Anschließend können Schweißnähte hergestellt werden, die einen Verlauf aufweisen, die den Konturen der Messfedern 10 entspricht. In einem nächsten Verfahrensschritt werden die beiden Bleche 18 und 19 in eine gebogene Form gebracht, wobei die Biegung der gebogenen Form der Messfeder 10 bereits entspricht. Anschließend können die Messfedern 10 durch eine Vielzahl von Laserschnitten 20 voneinander getrennt werden, um die Messfedern 10 zu vereinzeln. Die Laserschnitte 20 können dabei angrenzend an oder in den Schweißnähten verlaufen, entlang derer die beiden Bleche 18 und 19 bereits miteinander verschweißt wurden. Im Ergebnis erhält man eine Vielzahl von Messfedern 10, wobei bereits die Anschlussfahne 17 in die Kontur der Messfedern 10 eingebracht ist.

Nach einer vorteilhaften Ausführungsform des Verfahrens können die Anschlussenden der Messfedern 10 bereits Aufweitungen 16 aufweisen, die mittels eines Dornwerkzeuges in die Messfedern 10 eingearbeitet wurden. Das Einbringen der Aufweitungen 16 in die Anschlussenden der Messfedern 10 kann noch vor dem Einbringen der Biegung in die Bleche 18 und 19 erfolgen.

In einem nicht gezeigten letzten Verfahrensschritt können die Messfedern 10 vor Anordnung am Grundkörper 11 durch ein Innenhochdruckumformen konturiert werden. Dabei werden die gebogenen Messfedern 10 in eine Vorrichtung eingespannt, und der Druckraum, der sich zwischen den beiden Blechstreifen 18 und 19 erstreckt, wird unter hohen Druck gesetzt. Damit kann ein Profil in den Querschnitt der Messfedern 10 eingepresst werden, wobei als Druckmittel vorzugsweise Druckluft Verwendung findet, um in den Druckraum der Messfeder 10 keine Fremdfluide einzubringen.

Das Innenhochdruckumformen kann beispielhaft auch nach dem Autofrettage - Verfahren ausgebildet und durchgeführt bzw. durch dieses ergänzt werden. Das Verfahren dient zur Festigkeitssteigerung von Rohrleitungen, sodass auch die Messfeder 10 eines Druckmessgerätes mit diesem Verfahren vorteilhaft bearbeitet werden kann. Allgemein kann bei diesem Verfahren das Rohr bereits nach seiner Herstellung einem über dem späteren Betriebsdruck und über der Streckgrenze liegenden Innendruck ausgesetzt werden, so dass die Bereiche an der Innenwand plastifizieren. Nach dem Entspannen entstehen in diesem Bereich Druckeigenspannungen, die einer Rissbildung im späteren Einsatz vorbeugen und somit die Zeitfestigkeit bis hin zur Dauerfestigkeit steigern. Die Rohre können mit dieser Behandlung entweder bei einem höheren Betriebsdruck oder/und längere Zeit betrieben werden, als ohne die Autofrettage- Behandlung.

Die Erfindung beschränkt sich in ihren Ausführungen nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumlichen Anordnungen und Verfahrensschritte, können sowohl für sich als auch in den verschiedensten Kombinationen erfindungswesentlich sein. Insbesondere ist das Verfahren nicht durch die aufgezeigten Verfahrensschritte begrenzt und die aufgezeigten Verfahrensschritte müssen nicht in der angegebenen Reihenfolge stattfinden.

### Bezugszeichenliste

- 10: Messfeder
- 11: Grundkörper
- 12: Druckleitung
- 13: Anschlagkörper
- 14: Gegenanschlagkörper
- 15: Führungsanformung
- 16: Aufweitung
- 17: Anschlussfahne
- 18: erster Blechstreifen
- 19: zweiter Blechstreifen
- 20: Laserschnitt
- 21: Aufnahmefläche
- 22: Schweißverbindung
- 23: Schweißverbindung
- 24: Laserstrahl
- 25: Schweißnaht
- 26: Oberfläche
- 27: Zwischenschweißnaht
- 28: Fixieraufnahme

- f: Fokallänge

## Patentansprüche

1. Druckmessgerät zum Messen von Drücken von Fluiden, insbesondere Manometer, mit einer Messfeder (10), die an einem Grundkörper (11) angeordnet ist, wobei die Messfeder (10) eine gebogene Form mit einem Druckraum aufweist und wobei der Druckraum über eine Druckleitung (12) im Grundkörper (11) mit dem Fluid beaufschlagbar ist, sodass eine elastische Verformung der Messfeder (10) eintritt, die über ein Messwerk als Druckwert anzeigbar ist, wobei zur Verbindung der Messfeder (10) mit dem Grundkörper (11) ein Anschlagkörper (13) vorgesehen ist, gegen den die Messfeder (10) mit einer ersten Federseite zur Anlage gebracht ist und wobei die Messfeder (10) mit dem Anschlagkörper (13) verschweißt ist, **dadurch gekennzeichnet dass** die Messfeder (10) aus zwei aufeinander angeordneten Blechstreifen (18, 19) ausgebildet ist, die umfangsseitig miteinander verbunden sind, sodass zwischen den Blechstreifen (18, 19) der Druckraum gebildet ist,
dass die Messfeder (10) am freien Ende eine Anschlussfahne (17) aufweist, an die wenigstens ein Element des Messwerkes des Druckmessgerätes anschließbar ist, wobei die Anschlussfahne (17) einteilig aus wenigstens einem der Blechstreifen (18, 19) gebildet ist.

2. Druckmessgerät nach Anspruch 1, **dadurch gekennzeichnet, dass** ein Gegenanschlagkörper (14) vorgesehen ist, der an einer der ersten Federseite gegenüberliegenden zweiten Federseite gegen die Messfeder (10) zur Anlage gebracht ist.

3. Druckmessgerät nach Anspruch 1 oder 2, **dadurch gekennzeichnet, dass** der Anschlagkörper (13) einteilig mit dem Grundkörper (11) ausgebildet ist.

4. Druckmessgerät nach Anspruch 1 oder 2, **dadurch gekennzeichnet, dass** der Anschlagkörper (13) als Einzelteil ausgeführt und am Grundkörper (11) angeordnet und insbesondere mittels einer Schweißung am Grundkörper (11) angeschweißt ist.

5. Druckmessgerät nach einem der vorhergehenden Ansprüche, **dadurch gekennzeichnet, dass** der Anschlagkörper (13) und/oder der Gegenanschlagkörper (14) wenigstens eine Führungsanformung (15) aufweist, die eine genaue Positionierung der Anschlagkörper (13, 14) zueinander ermöglicht.

6. Druckmessgerät nach einem der vorhergehenden Ansprüche, **dadurch gekennzeichnet, dass** der Gegenanschlagkörper (14) durch eine Schweißung am Grundkörper (11) angeordnet ist.

7. Druckmessgerät nach einem der vorhergehenden Ansprüche, **dadurch gekennzeichnet, dass** die Messfeder (10) wenigstens am Anschlagkörper (13) und/oder am Gegenanschlagkörper (14) verschweißt ist.

8. Druckmessgerät nach einem der vorhergehenden Ansprüche, **dadurch gekennzeichnet, dass** wenigstens eine der vorgesehenen Schweißungen mittels eines Laserstrahlschweißens oder eines Elektronenstrahlschweißens erzeugt ist.

9. Messfeder (10) für ein Druckmessgerät zum Messen von Drücken von Fluiden, insbesondere Manometer, wobei die Messfeder (10) an einem Grundkörper (11) angeordnet ist und eine gebogene Form mit einem Druckraum aufweist, wobei der Druckraum über eine Druckleitung (12) im Grundkörper (11) mit dem Fluid beaufschlagbar ist, sodass eine elastische Verformung der Messfeder (10) eintritt, die über ein Messwerk als Druckwert anzeigbar ist, wobei zur Verbindung der Messfeder (10) mit dem Grundkörper (11) ein Anschlagkörper (13) vorgesehen ist, gegen den die Messfeder (10) mit einer ersten Federseite zur Anlage gebracht ist und wobei die Messfeder (10) mit dem Anschlagkörper (13) verschweißt ist, **dadurch gekennzeichnet dass** die Messfeder (10) aus zwei aufeinander angeordneten Blechstreifen (18, 19) ausgebildet ist, die umfangsseitig miteinander verbunden sind, sodass zwischen den Blechstreifen (18, 19) der Druckraum gebildet ist,
dass die Messfeder (10) am freien Ende eine Anschlussfahne (17) aufweist, an die wenigstens ein Element des Messwerkes des Druckmessgerätes anschließbar ist, wobei die Anschlussfahne (17) einteilig aus wenigstens einem der Blechstreifen (18, 19) gebildet ist.

10. Verfahren zur Herstellung von Messfedern (10) für ein Druckmessgerät zum Messen von Drücken von Fluiden, insbesondere Manometer, wobei die Messfedern (10) eine gebogene Form mit einem Druckraum aufweisen und wobei der Druckraum mit einem Fluid beaufschlagbar ist, sodass eine elastische Verformung der Messfedern (10) eintritt, die über ein Messwerk als Druckwert anzeigbar ist, wobei das Verfahren wenigsten die folgenden Schritte umfasst:
- Anordnen eines ersten Bleches (18) und eines zweiten Bleches (19) in einer planparallelen Lage aufeinander,
- Erzeugen von Aufweitungen (16) von Anschlussenden mit einem Dornwerkzeug für eine Vielzahl von Messfedern (10) zum Anschluss an einen Grundkörper (11),
- Herstellung von Schweißungen zum Verschweißen der Bleche (18, 19) wenigstens im Bereich der Aufweitungen aufeinander,
- Walzen der aufeinander geschweißten Bleche in eine gebogene Form, wobei die Biegung der gebogenen Form der Messfedern (10) entspricht und
- Vereinzeln der Messfedern (10) mittels einem Trennverfahren.

11. Verfahren nach Anspruch 10, **dadurch gekennzeichnet, dass** eine Herstellung von Schweißnähten, die die Konturen einer Vielzahl von Messfedern (10) bilden, vorgenommen wird, wobei die Herstellung der Schweißnähte vorzugsweise nach dem Walzen der aufeinander geschweißten Bleche in die gebogene Form vorgenommen wird.

12. Verfahren nach Anspruch 10 oder 11, **dadurch gekennzeichnet, dass** die Vereinzelung der Messfedern (10) mittels einem Lasertrennverfahren vorgenommen wird, indem eine Vielzahl von Laserschnitten (20) gebildet wird, welche Laserschnitte (20) vorzugsweise benachbart zum oder im Verlauf der Schweißnähte verlaufen.

13. Verfahren nach Anspruch 11 bis 12, **dadurch gekennzeichnet, dass** die Konturen der Schweißnähte zur Bildung der Messfedern (10) Anschlussfahnen (17) umfassen, die nach Vereinzelung der Messfedern (10) in eine abgewinkelte Anordnung gebogen werden.

## Claims

1. A pressure measuring device for the measuring of pressures of fluids, in particular a manometer, with a measuring spring (10), which is arranged on a base body (11), wherein the measuring spring (10) has a curved shape with a pressure chamber, and wherein the pressure chamber can be applied with the fluid in the base body (11) through a pressure line (12) so that an elastic deformation of the measuring spring (10) occurs, which can be indicated as a pressure value through a measuring element,
wherein a stop body (13) is provided for the connection of the measuring spring (10) with the base body (11), against which the measuring spring (10) is made to rest with a first spring side, and wherein the measuring spring (10) is welded to the stop body (13),
**characterized in that**
the measuring spring (10) is formed of two sheet metal strips (18, 19) located on top of each other, which are connected to one another circumferentially, so that the pressure chamber is formed between the sheet metal strips (18, 19), **in that** the measuring spring (10) comprises a connection lug (17) at the free end, to which at least one element of the measuring element of the pressure measuring device can be connected, wherein the connection lug (17) is formed in one piece from the sheet metal strip (18, 19).

2. The pressure measuring device according to claim 1, **characterized in that** a counter-stop body (14) is provided, which is made to rest against the measuring spring (10) on a second spring side opposite the first spring side.

3. The pressure measuring device according to claim 1 or 2, **characterized in that** the stop body (13) is formed integrally with the base body (11).

4. The pressure measuring device according to claim 1 or 2, **characterized in that** the stop body (13) is formed as an individual component and is arranged on the base body (11) and welded to the latter in particular by means of a welding.

5. The pressure measuring device according to one of the preceding claims,
**characterized in that** the stop body (13) and/or the counter-stop body (14) comprises at least one guide molding (15), which allows for the exact positioning of the stop bodies (13, 14) in relation to one another.

6. The pressure measuring device according to one of the preceding claims,
**characterized in that** the counter-stop body (14) is arranged at the base body (11) by means of a welding.

7. The pressure measuring device according to one of the preceding claims,
**characterized in that** the measuring spring (10) is welded to at least the stop body (13) and/or the counter-stop body (14).

8. The pressure measuring device according to one of the preceding claims,
**characterized in that** at least one of the provided welds is produced by means of laser beam welding or electron beam welding.

9. A measuring spring (10) for a pressure measuring device for measuring pressures of fluids, in particular a manometer, wherein the measuring spring (10) is arranged on a base body (11) and has a curved shape with a pressure chamber, wherein the pressure chamber can be applied in the base body (11) with the fluid through a pressure line (12), so that an elastic deformation of the measuring spring (10) occurs, which can be indicated as a pressure value through a measuring element,
wherein a stop body (13) is provided for the connection of the measuring spring (10) with the base body (11), against which the measuring spring (10) is made to rest with a first spring side, and wherein the measuring spring (10) is welded to the stop body (13),
**characterized in that**
the measuring spring (10) is formed of two sheet metal strips (18, 19) located on top of each other, which are connected to one another circumferentially, so that the pressure chamber is formed between the sheet metal strips (18, 19), **in that** the measuring spring (10) comprises a connection lug (17) at the free end, to which at least one element of the measuring element of the pressure measuring device can be connected, wherein the connection lug (17) is formed in one piece from at least one of the sheet metal strips (18, 19).

10. A method for producing measuring springs (10) for a pressure measuring device for measuring the pressures of fluids, in particular a manometer, wherein the measuring springs (10) have a curved shape with a pressure chamber, and wherein the pressure chamber can be applied with a fluid, so that an elastic deformation of the measuring springs (10) occurs, which can be indicated as a pressure value through a measuring element, wherein the method includes at least the following steps:
- Arranging a first sheet metal (18) and a second sheet metal (19) in a plane-parallel position on top of each other,
- Generating expansions (16) of connection ends with a drift pin for a plurality of measuring springs (10) for the connection to a base body (11),
- Producing welds for welding the sheets (18, 19) at least in the region of the expansions on top of each other,
- Rolling the sheets welded on top of each other in a curved shape, with the curvature corresponding to the curved shape of the measuring springs (10), and
- Singulating the measuring springs (10) by means of a separation process.

11. The method according to claim 10, **characterized in that** a production of weld seams, which form the contours of a plurality of measuring springs (10), is performed, wherein the production of the weld seams is performed preferably after the rolling of the welded sheets into the curved shape.

12. The method according to claim 10 or 11, **characterized in that** the singulation of the measuring springs (10) is performed by means of a laser separation process by producing a plurality of laser cuts (20), which laser cuts (20) preferably extend adjacent to or alongside the weld seams.

13. The method according to claim 11 to 12, **characterized in that** the contours of the weld seams for forming the measuring springs (10) include connection lugs (17), which are bent into an angled arrangement after the singulation of the measuring springs (10).

## Revendications

1. Dispositif de mesure de pression destiné à mesurer des pressions de fluides, notamment manomètre, avec un ressort de mesure (10) qui est agencé au niveau d'un corps de base (11), le ressort de mesure (10) ayant une forme incurvée avec une chambre de pression et la chambre de pression pouvant être alimentée en fluide, par l'intermédiaire d'une conduite de pression (12) dans le corps de base (11) de telle sorte qu'une déformation élastique du ressort de mesure (10) se produise, laquelle peut être indiquée à l'aide d'un instrument de mesure sous la forme d'une valeur de pression,
un corps de butée (13) étant prévu pour le raccordement du ressort de mesure (10) avec le corps de base (11), contre lequel corps le ressort de mesure (10) vient en appui avec un premier côté du ressort et où le ressort de mesure (10) est soudé avec le corps de butée (13),
**caractérisé en ce que**
le ressort de mesure (10) est conçu de deux bandes métalliques (18, 19) agencées de manière superposée l'une sur l'autre, qui sont reliées l'une à l'autre au côté de circonférence de façon à former la chambre de pression entre les bandes métalliques (18, 19),
**en ce que** le ressort de mesure (10) présente à l'extrémité libre une patte de raccordement (17) au niveau de laquelle au moins un élément de l'instrument de mesure du dispositif de mesure de pression peut être raccordé, la patte de raccordement (17) étant formée d'une seule pièce à partir d'au moins une des bandes métalliques (18, 19).

2. Dispositif de mesure de pression selon la revendication 1, **caractérisé en ce qu'**un corps de contre-butée (14) est prévu, lequel vient en appui contre le ressort de mesure (10) au niveau d'un deuxième côté du ressort opposé au premier côté du ressort.

3. Dispositif de mesure de pression selon la revendication 1 ou 2, **caractérisé en ce que** le corps de butée (13) est formé d'une seule pièce avec le corps de base (11).

4. Dispositif de mesure de pression selon la revendication 1 ou 2, **caractérisé en ce que** le corps de butée (13) est conçu comme une seule pièce et est agencé au niveau du corps de base (11) et est soudée au corps de base (11) notamment au moyen d'une soudure.

5. Dispositif de mesure de pression selon l'une quelconque des revendications précédentes, **caractérisé en ce que** le corps de butée (13) et/ou le corps de contre-butée (14) présentent au moins un moulage de guidage (15), qui permet un positionnement précis des corps de butée (13, 14) l'un par rapport à l'autre.

6. Dispositif de mesure de pression selon l'une des revendications précédentes,
**caractérisé en ce que** le corps de contre-butée (14) est agencé au niveau du corps de base (11) au moyen d'une soudure.

7. Dispositif de mesure de pression selon l'une quelconque des revendications précédentes, **caractérisé en ce que** le ressort de mesure (10) est soudé au moins au niveau du corps de butée (13) et/ou au niveau du corps de contre-butée (14).

8. Dispositif de mesure de pression selon l'une quelconque des revendications précédentes, **caractérisé en ce qu'**au moins l'une des soudures prévues est produite au moyen d'un soudage par faisceau laser ou par faisceau d'électrons.

9. Ressort de mesure (10) pour un dispositif de mesure de pression destiné à mesurer des pressions de fluides, notamment pour un manomètre, le ressort de mesure (10) étant agencé au niveau d'un corps de base (11) et présentant une forme incurvée avec une chambre de pression, la chambre de pression pouvant être alimentée en fluide, par l'intermédiaire d'une conduite de pression (12) dans le corps de base (11), de telle sorte qu'une déformation élastique du ressort de mesure (10) se produise, laquelle peut être indiquée à l'aide d'un instrument de mesure sous la forme d'une valeur de pression, un corps de butée (13) étant prévu pour le raccordement du ressort de mesure (10) avec le corps de base (11), contre lequel corps le ressort de mesure (10) vient en appui avec un premier côté du ressort et le ressort de mesure (10) étant soudé avec le corps de butée (13),
**caractérisé en ce que**
le ressort de mesure (10) est composé de deux bandes métalliques (18, 19) agencées de manière superposée qui sont reliées l'une à l'autre sur la circonférence de façon à former entre les bandes métalliques (18, 19) la chambre de pression,
**en ce que** le ressort de mesure (10) présente à une extrémité libre une patte de raccordement (17) au niveau de laquelle au moins un élément de l'instrument de mesure du dispositif de mesure de pression peut être raccordé, la patte de raccordement (17) étant formée d'une seule pièce à partir d'au moins une des bandes métalliques (18, 19).

10. Procédé de fabrication de ressorts de mesure (10) pour un dispositif de mesure de pression destiné à mesurer des pressions de fluides, notamment un manomètre, les ressorts de mesure (10) présentant une forme incurvée avec une chambre de pression et la chambre de pression pouvant être alimentée en fluide de telle sorte qu'une déformation élastique des ressorts de mesure (10) se produise, laquelle peut être indiquée à l'aide d'un instrument de mesure sous la forme d'une valeur de pression, le procédé comprenant au moins les étapes suivantes de :
- agencer une première feuille métallique (18) et une deuxième feuille métallique (19) dans une position plane et parallèle l'une sur l'autre,
- générer des extensions (16) des extrémités de raccordement avec un outil de poinçon pour une pluralité de ressorts de mesure (10) destinés à se raccorder à un corps de base (11),
- produire des soudures destinées à souder les feuilles métalliques (18, 19) l'une sur l'autre au moins dans la zone des extensions,
- laminer les feuilles métalliques soudées l'une sur l'autre en une forme incurvée, le pliage de la forme incurvée correspondant aux ressorts de mesure (10), et
- séparer les ressorts de mesure (10) au moyen d'un processus de séparation.

11. Procédé selon la revendication 10, **caractérisé en ce qu'**on réalise une production de cordons de soudure, qui forment les contours d'une pluralité de ressorts de mesure (10), la production de cordons de soudure étant réalisée de préférence après le laminage des bandes soudées l'une sur l'autre en la forme incurvée.

12. Procédé selon la revendication 10 ou 11, **caractérisé en ce que** la séparation des ressorts de mesure (10) est réalisée au moyen d'un procédé de séparation par laser, en créant une pluralité de découpes laser (20) lesquelles découpes laser (20) s'étendent de préférence de manière adjacente aux cordons de soudure ou sur les cordons de soudure.

13. Procédé selon la revendication 11 à 12, **caractérisé en ce que** les contours des cordons de soudure destinés à former les ressorts de mesure (10) comprennent des pattes de raccordement (17) qui, après séparation des ressorts de mesure (10), sont incurvées dans un agencement coudé.
